# EUROPEAN PATENT SPECIFICATION

(11) **EP 3 276 279 B1**
(45) Date of publication and mention of the grant of the patent: **12.08.2020**
(21) Application number: 15887460.2
(22) Date of filing: 27.03.2015
(51) Int. Cl.: F25B 30/02, F25B 43/00, F24H 4/04, F24H 1/00, F24H 9/20, F24D 17/02, F24D 19/10, F24F 1/24, F24F 5/00, F25B 49/02

(54) **HEAT PUMP HOT-WATER-SUPPLY OUTDOOR DEVICE, AND HOT-WATER-SUPPLY DEVICE**
WÄRMEPUMPENHEISSWASSERVERSORGUNGSVORRICHTUNG FÜR DRAUSSEN UND HEISSWASSERVERSORGUNGSVORRICHTUNG
DISPOSITIF D'EXTÉRIEUR D'ALIMENTATION EN EAU CHAUDE DE POMPE À CHALEUR ET DISPOSITIF D'ALIMENTATION EN EAU CHAUDE

(43) Date of publication of application: 31.01.2018
(73) Proprietor: Mitsubishi Electric Corporation, Chiyoda-ku Tokyo 100-8310 (JP)
(72) Inventor: MOTEGI, Shuuji, Tokyo 100-8310 (JP)
(74) Representative: Pfenning, Meinig & Partner mbB
(86) International application number: PCT/JP2015/059660
(87) International publication number: WO 2016/157305

(56) References cited:
- EP-A1- 1 862 743
- JP-A- H 085 201
- JP-A- H 085 201
- JP-A- H0 814 709
- JP-A- 2005 345 006
- JP-A- 2005 345 006
- JP-A- 2010 145 054
- JP-A- 2013 064 538
- JP-A- 2014 066 372

## Description

### [Technical Field]

The present invention relates to a heat pump water-heater outdoor unit and a water heater that uses the heat pump water-heater outdoor unit as a heating source.

### [Background Art]

As a conventional art, a heat pump water-heater outdoor unit described in, e.g., PTL 1 is known. The heat pump water-heater outdoor unit of the conventional art includes a heat pump cycle constituted by a refrigerant circuit. The heat pump water-heater outdoor unit collects heat in air by using the heat pump cycle to thereby heat water for hot water supply or the like. Herein, during the operation of the heat pump water-heater outdoor unit, the state of a refrigerant changes in accordance with, e.g., environmental conditions such as outdoor temperature and water temperature during heating and setting conditions such as heating temperature and the like, whereby the circulation amount of the refrigerant required for the operation easily changes. Accordingly, in the refrigerant circuit of the conventional art, one accumulator that stores a surplus liquid refrigerant is disposed.
EP1862743A1 discloses an outdoor unit of air conditioner having a cooling structure where a casing is partitioned into a blower chamber and a machine chamber by a partition plate. The casing contains an outdoor heat exchanger and an outdoor fan that are disposed inside the blower chamber; a compressor that is disposed inside the machine chamber; an accumulator that is disposed inside the machine chamber and is capable of temporarily storing high pressure liquid refrigerant; and first and second electrical equipment units. The second electrical equipment is attached to the accumulator.
JP H085201 A discloses an air conditioning apparatus comprising an indoor unit and an outdoor unit comprising a part of a refrigerant circuit. Therein the outdoor unit has a plurality of accumulators either in parallel or in series constituting the part of a refrigerant circuit. JP 2005345006 A discloses to a heat pump type hot water supply heating device provided with a heat pump unit. Therein the heat pump unit comprises a refrigerant circuit including an internal refrigerant exchanger, two water-refrigerant exchangers in part, an air-refrigerant heat exchanger, expansion valves, a compressor and an accumulator. Via a crank-shape design and the arrangement of each water-refrigerant exchanger the size of the whole heat pump unit is reduced. This document discloses a heat pump water-heater outdoor unit according to the preamble of claim 1.

### [Citation List]

### [Patent Literature]

[PTL 1] Japanese Patent Application Laid-open No. H5-66028

### [Summary of Invention]

### [Technical Problem]

In the above-described conventional art, when the capacity of the accumulator is increased, an application range in the case where the above various conditions greatly change is increased, and the efficiency of the heat pump water-heater outdoor unit is significantly improved. Accordingly, in the conventional art, use of a large accumulator is desired. However, when the size of the accumulator is increased, the outer dimensions of the heat pump water-heater outdoor unit need to be increased, and hence its material cost is increased, it becomes difficult to secure an installation place and handle the heat pump water-heater outdoor unit during transportation thereof, and a problem arises in that the convenience of a user is reduced.

The present invention has been made in order to solve the above problem, and an object thereof is to provide the heat pump water-heater outdoor unit and the water heater capable of preventing an increase in outer dimensions while increasing the capacity of the accumulator and achieving high efficiency and convenience at low cost.

### [Solution to Problem]

A heat pump water-heater outdoor unit according to claim 1 is proposed.

### [Advantageous Effects of Invention]

According to the present invention, it is possible to prevent an increase in the size of the heat pump water-heater outdoor unit while increasing the total capacity of the entire accumulator using the plurality of the accumulators. With this, it is possible to enhance the performance of the heat pump water-heater outdoor unit at low cost. In addition, it is possible to achieve the heat pump water-heater outdoor unit that is easy to install and transport.

### [Brief Description of Drawings]

Fig. 1 is a front view of a heat pump water-heater outdoor unit according to Embodiment 1 of the present invention as viewed from the front with a cabinet detached therefrom.
Fig. 2 is a perspective view of the heat pump water-heater outdoor unit as viewed obliquely from the front.
Fig. 3 is a perspective view of the heat pump water-heater outdoor unit as viewed obliquely from the rear.
Fig. 4 is a configuration diagram showing a heat pump water heater according to Embodiment 1 of the present invention.
Fig. 5 is an enlarged view of a principal portion in which a right upper portion of a heat pump water-heater outdoor unit according to Embodiment 2 of the present invention is enlarged and shown.

### [Description of Embodiments]

### Embodiment 1

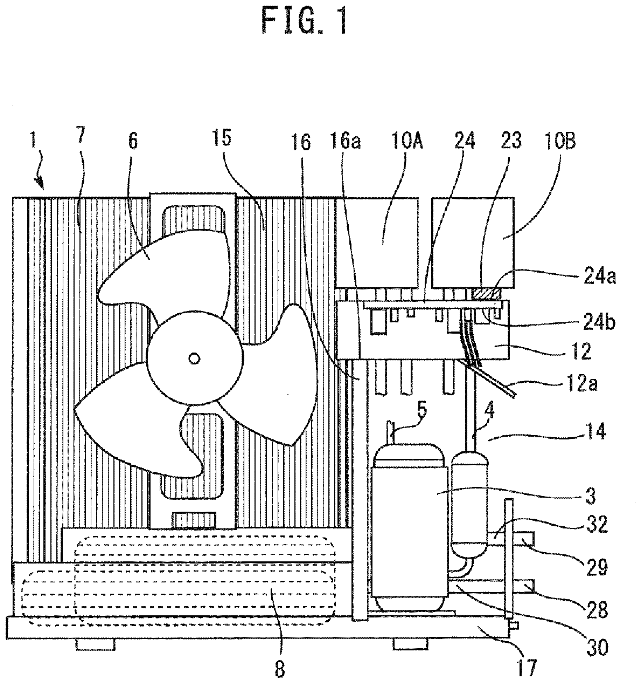

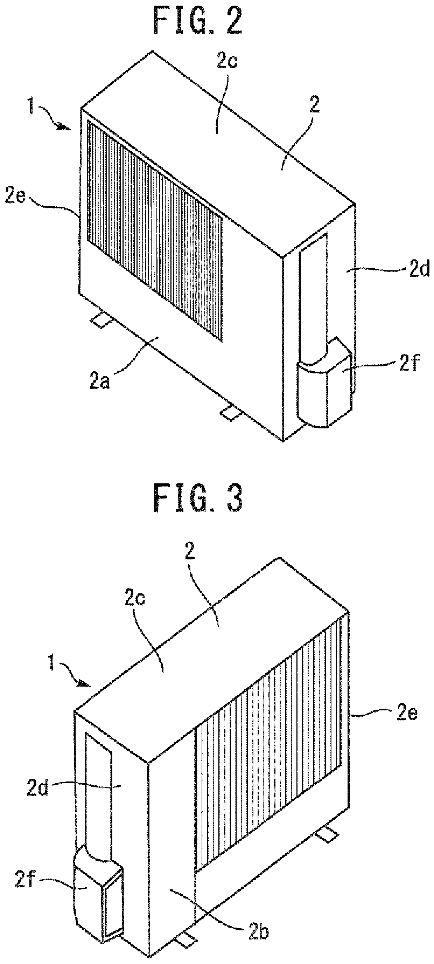

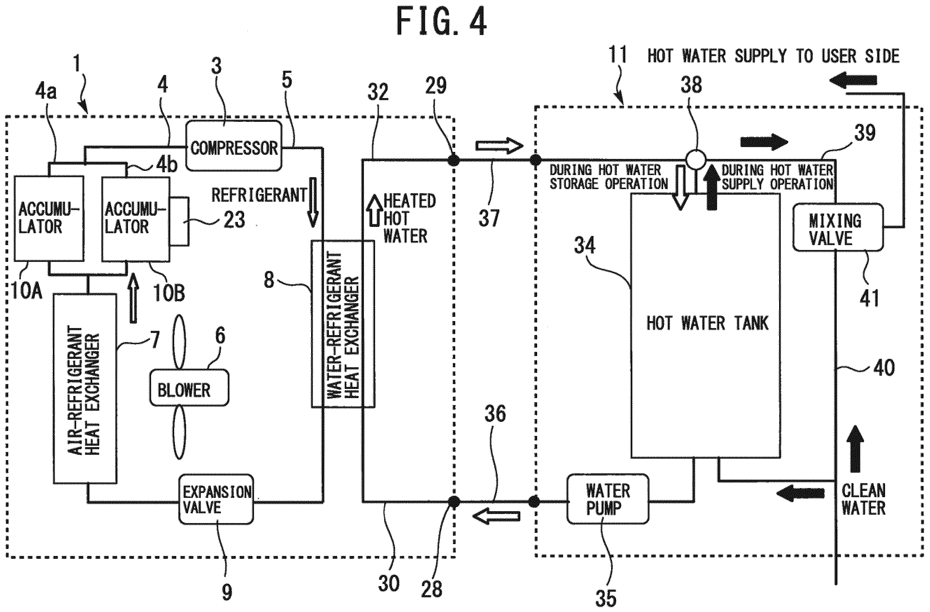

Hereinbelow, with reference to Figs. 1 to 4, Embodiment 1 of the present invention will be descried. Note that common elements in the drawings used in the present description are denoted by like reference numerals, and the duplicate description thereof will be omitted. In addition, the present invention is not limited to the following embodiments, and can be variously modified without departing from the gist of the present invention. Fig. 1 is a front view of a heat pump water-heater outdoor unit according to Embodiment 1 of the present invention as viewed from the front with a cabinet detached therefrom. Each of Figs. 2 and 3 is a perspective view of the heat pump water-heater outdoor unit as viewed obliquely from the front or the rear. Fig. 4 is a configuration diagram showing a heat pump water heater according to Embodiment 1 of the present invention.

As shown in Figs. 1 to 4, the water heater of the present embodiment includes a heat pump water-heater outdoor unit 1 and a tank unit 11. The heat pump water-heater outdoor unit 1 heats water by using a heat pump cycle, and includes a cabinet 2, and a compressor 3, an intake pipe 4, a discharge pipe 5, a blower 6, an air-refrigerant heat exchanger 7, a water-refrigerant heat exchanger 8, an expansion valve 9, and accumulators 10A and 10B that are provided in the cabinet 2. Note that, in the present description, high-temperature water (hot water) and low-temperature water (water) are collectively referred to as the "hot and cold water". In addition, "middle-temperature water" means water having a temperature between those of the high-temperature water and the low-temperature water.

The cabinet 2 constitutes the outer casing of the heat pump water-heater outdoor unit 1 and is formed into, e.g., a quadrangular box-like shape and, as shown in Figs. 2 and 3, the cabinet 2 includes a front surface portion 2a, a rear surface portion 2b, an upper surface portion 2c, a right side surface portion 2d, and a left side surface portion 2e. In addition, a service panel 2f that covers a terminal block 12a, a water inlet valve 28, a hot water outlet valve 29, and the like is detachably attached to the right side surface portion 2d of the cabinet 2. Note that, in the present description, a direction in which the front surface portion 2a and the rear surface portion 2b of the cabinet 2 oppose each other is described as a "front and rear direction", and a direction in which the right side surface portion 2d and the left side surface portion 2e oppose each other is described as a "left and right direction". In addition, the present embodiment describes, as an example, the case where the left and right direction is a horizontal specific direction.

### (Configuration of refrigerant circuit)

First, with reference to Fig. 4, the circuit configuration of a refrigerant circuit will be described. The compressor 3, the air-refrigerant heat exchanger 7, the water-refrigerant heat exchanger 8, the expansion valve 9, and the accumulators 10A and 10B are annularly connected by using the intake pipe 4 and the discharge pipe 5 to constitute the refrigerant circuit in which a refrigerant circulates. Each of the intake pipe 4 and the discharge pipe 5 corresponds to a refrigerant pipe in the present embodiment. The intake pipe 4 connects the inlet of the compressor 3 and the outlet of the expansion valve 9. The discharge pipe 5 connects the discharge port of the compressor 3 and the inlet of the expansion valve 9. The compressor 3 sucks the refrigerant and discharges the refrigerant after compressing it, and includes a compression portion that performs the compression operation of the refrigerant and a motor that drives the compression portion (the compression portion and the motor are not shown).

The inlet of the compressor 3 is connected to the refrigerant outlet of the air-refrigerant heat exchanger 7 via the intake pipe 4 and the accumulators 10A and 10B. The discharge port of the compressor 3 is connected to the refrigerant inlet of the water-refrigerant heat exchanger 8 via the discharge pipe 5. The compressor 3 is supplied with electric power from the outside via an electric component storage box 12 described later to thereby operate. The air-refrigerant heat exchanger 7 takes in heat in air to heat the refrigerant. The water-refrigerant heat exchanger 8 performs a heat exchange between the refrigerant having a high temperature discharged from the compressor and heating target water introduced from the tank unit 11 to thereby heat the heating target water. The expansion valve 9 is connected to the refrigerant inlet of the air-refrigerant heat exchanger 7 via the intake pipe 4, and is also connected to the refrigerant outlet of the water-refrigerant heat exchanger 8 via the discharge pipe 5. The expansion valve 9 is energized from the outside to thereby adjust the flow rate of the refrigerant that passes through the expansion valve 9 and adjust a difference in the pressure of the refrigerant between the intake pipe 4 and the discharge pipe 5.

The accumulators 10A and 10B store the refrigerant that flows in from the upstream side of the refrigerant circuit (the side of the air-refrigerant heat exchanger 7) inside thereof and also separate the refrigerant into a gaseous refrigerant and a liquid refrigerant at the same time, and cause the gaseous refrigerant to flow out toward the compressor 3. With this, the accumulators 10A and 10B prevent the inflow of the surplus liquid refrigerant into the compressor 3 as the situation demands. The intake pipe 4 is branched into two ducts 4a and 4b that are in parallel with each other between the compressor 3 and the air-refrigerant heat exchanger 7. The accumulators 10A and 10B are provided in the ducts 4a and 4b respectively, are connected to each other in parallel at an intermediate point in the refrigerant circuit. The total capacity of the two accumulators 10A and 10B is set to, e.g., about several liters to several tens of liters. In the thus configured refrigerant circuit, the refrigerant such as, e.g., a CO2 refrigerant is sealed. Note that there are cases where a component other than those described above is attached to the refrigerant pipe.

### (Arrangement in cabinet)

Next, with reference to Fig. 1, the arrangement configuration in the cabinet 2 will be described. In the cabinet 2, a partition plate 16 that extends in the front and rear direction and an up and down direction of the heat pump water-heater outdoor unit 1 is provided. The partition plate 16 stands substantially vertically on a flat base 17 that constitutes the lower surface portion of the heat pump water-heater outdoor unit 1. The upper end portion 16a of the partition plate 16 abuts on the electric component storage box 12. The internal space of the cabinet 2 is separated into a machine chamber 14 positioned on the right side of the partition plate 16 and a blower chamber 15 positioned on the left side of the partition plate 16.

In the machine chamber 14, the compressor 3, the accumulators 10A and 10B, the electric component storage box 12, and the like are stored. The compressor 3 is stored in the lower portion of the machine chamber 14 in a state in which the compressor 3 is placed on the base 17. The electric component storage box 12 controls actuators of the compressor 3, the expansion valve 9, the blower 6, and the like and is disposed in the upper portion of the machine chamber 14. The electric component storage box 12 is disposed above the compressor 3 with an interval therebetween, and the terminal block 12a that is connected to an external power supply or the like is provided in the right lower portion of the electric component storage box 12. In addition, above the electric component storage box 12, space is formed between the electric component storage box 12 and the upper surface portion 2c of the cabinet 2, and the accumulators 10A and 10B are disposed in the space in a state in which the accumulators 10A and 10B are arranged in the horizontal direction.

More specifically, an electronic substrate 24 on which various electronic components are mounted is stored substantially horizontally on the upper portion side of the electric component storage box 12. The individual electronic components mounted on the electronic substrate 24 constitute a plurality of modules that control the above actuators. Among the electronic components, an inverter module 23 that drives the compressor 3 is mounted on the upper surface 24a of the electronic substrate 24. Electronic components other than the inverter module 23 are mounted on the lower surface 24b of the electronic substrate 24. The inverter module 23 is constituted by a wide band gap semiconductor capable of supplying a large current to the compressor 3. Accordingly, the inverter module 23 is held so as to be in contact with the accumulator 10B that is reduced in temperature by storing the refrigerant. According to the invention, the inverter module 23 and the accumulator 10B are brought into surface contact with each other in a state in which they are in tight contact with each other in order to increase thermal conductivity therebetween.

Thus, in the present embodiment, the accumulator 10B functions as a heatsink of the inverter module 23, and hence a dedicated heatsink that is required in the inverter module of the conventional art is removed. With this, it is not necessary to consider an interference between the dedicated heatsink and the blower 6, and hence it is possible to secure the space between the electric component storage box 12 and the upper surface portion 2c of the cabinet 2. In addition, it is possible to compactly dispose the two accumulators 10A and 10B in the space in the state in which they are arranged in the horizontal direction. Note that, in the machine chamber 14, the intake pipe 4, the discharge pipe 5, the expansion valve 9 (depiction thereof is omitted in Fig. 1), and the like are stored in addition to the above components.

The blower chamber 15 positioned on the left side of the partition plate 16 has large space in order to secure an air path. The blower 6, the air-refrigerant heat exchanger 7, the water-refrigerant heat exchanger 8, and the like are stored in the blower chamber 15. The blower 6 includes, e.g., two or three propeller blades and a motor that rotationally drives the propeller blades, and is disposed on the front surface side of the blower chamber 15. The blower 6 is supplied with electric power from the outside to thereby operate, and causes air to pass through the air-refrigerant heat exchanger 7 disposed on the rear surface side of the blower chamber 15. The entire air-refrigerant heat exchanger 7 is formed into a quadrangular flat shape by combining a large number of aluminum thin fins with a long refrigerant circulation pipe that is in tight contact with the fins. The air-refrigerant heat exchanger 7 performs a heat exchange between the refrigerant flowing in the refrigerant circulation pipe and air present around the fins to thereby heat the refrigerant. A heat exchange amount at this point is adjusted in accordance with a blow amount by the blower 6 or the like. The water-refrigerant heat exchanger 8 is disposed on the base 17 in the lower portion of the blower chamber 15. The water-refrigerant heat exchanger 8 includes a water circulation pipe and a refrigerant circulation pipe that are bent in a crank-like shape in a state in which they are in tight contact with each other, and performs a heat exchange between the circulation pipes to thereby produce hot water.

In addition, as shown in Fig. 1, the water inlet valve 28 and the hot water outlet valve 29 are provided in the right side surface portion of the heat pump water-heater outdoor unit 1. The water inlet valve 28 is a connection port for introducing water into the water-refrigerant heat exchanger 8 from the tank unit 11. As shown in Fig. 4, the water inlet valve 28 is connected to the hot and cold water inlet of the water-refrigerant heat exchanger 8 via an internal inflow pipe 30. The hot water outlet valve 29 is a connection port for sending hot water toward the tank unit 11. The hot water outlet valve 29 is connected to the hot and cold water outlet of the water-refrigerant heat exchanger 8 via an internal outflow pipe 32. The internal inflow pipe 30 and the internal outflow pipe 32 are stored in the machine chamber 14.

### (Configuration of tank unit)

Next, with reference to Fig. 4, the configuration of the tank unit 11 will be described. The tank unit 11 includes a hot water tank 34, a water pump 35, a forward pipe 36, a return pipe 37, a switching valve 38, a hot water supply pipe 39, a water supply pipe 40, and a mixing valve 41. The hot water tank 34 stores hot water heated by the heat pump water-heater outdoor unit 1, and has a capacity of, e.g., about several hundred liters. The water pump 35 is a pump for circulating hot and cold water between the water-refrigerant heat exchanger 8 of the heat pump water-heater outdoor unit 1 and the hot water tank 34, and is provided in, e.g., the forward pipe 36. The forward pipe 36 connects the lower portion of the hot water tank 34 and the water inlet valve 28 of the heat pump water-heater outdoor unit 1. The return pipe 37 connects the hot water outlet valve 29 of the heat pump water-heater outdoor unit 1 and the switching valve 38.

The upper portion of the hot water tank 34 is connected to the return pipe 37 and the hot water supply pipe 39 via the switching valve 38. The switching valve 38 is constituted by an electromagnetic three-way valve or the like, and switches the pipe that communicates with the upper portion of the hot water tank 34 to one of the return pipe 37 and the hot water supply pipe 39. The hot water supply pipe 39 is a pipe for supplying hot water in the hot water tank 34 to a hot water supply target (not shown), and connects the switching valve 38 and the mixing valve 41. The water supply pipe 40 is a pipe for supplying low-temperature water such as tap water to the hot water tank 34 and the mixing valve 41. One end of the water supply pipe 40 is connected to an external water source (not shown). The other end of the water supply pipe 40 is branched into two pipes, and the two pipes are connected to the lower portion of the hot water tank 34 and the mixing valve 41. The mixing valve 41 mixes high-temperature water supplied from the hot water supply pipe 39 with low-temperature water supplied from the water supply pipe 40 to thereby produce hot water having a desired temperature, and supplies the produced hot water to the hot water supply target.

### (Operation of water heater)

Next, with reference to Fig. 4, the hot water storage operation and the hot water supply operation of the water heater according to the present embodiment will be described. Open arrows in Fig. 4 indicate the flows of hot and cold water and the refrigerant during the hot water storage operation, and solid arrows indicate the flow of hot and cold water during the hot water supply operation. First, in the hot water storage operation, the heat pump water-heater outdoor unit 1 and the water pump 35 are operated in a state in which the upper portion of the hot water tank 34 and the return pipe 37 are caused to communicate with each other using the switching valve 38. With this, low-temperature water flows out from the lower portion of the hot water tank 34 into the forward pipe 36. The low-temperature water flows into the water-refrigerant heat exchanger 8 via the forward pipe 36, the water pump 35, and the internal inflow pipe 30, and is heated by the water-refrigerant heat exchanger 8. Subsequently, high-temperature water having flowed out from the water-refrigerant heat exchanger 8 flows into the upper portion of the hot water tank 34 via the internal outflow pipe 32, the return pipe 37, and the switching valve 38. Thus, in the hot water storage operation, hot water heated by the heat pump water-heater outdoor unit 1 is stored in the hot water tank 34.

In addition, in the hot water storage operation, the heat pump water-heater outdoor unit 1 operates in the following manner. First, when the compressor 3 operates, a low-pressure refrigerant is sucked into the compressor 3 from the intake pipe 4. The low-pressure refrigerant becomes a high-temperature high-pressure refrigerant by being compressed by the compressor 3, and the high-temperature high-pressure refrigerant is discharged into the discharge pipe 5. Subsequently, the high-temperature high-pressure refrigerant flows into the refrigerant inlet of the water-refrigerant heat exchanger 8, and heats the heating target water introduced into the water-refrigerant heat exchanger 8 from the hot water tank 34. With this, in the water-refrigerant heat exchanger 8, the enthalpy and temperature of the refrigerant are reduced. Subsequently, the refrigerant having flowed out from the water-refrigerant heat exchanger 8 flows into the expansion valve 9, the pressure thereof is reduced and the temperature thereof is further reduced so that the refrigerant becomes a low-temperature low-pressure refrigerant, and then the low-temperature low-pressure refrigerant flows into the inlet portion of the air-refrigerant heat exchanger 7. By the heat exchange with air in the air-refrigerant heat exchanger 7, the enthalpy and temperature of the low-temperature low-pressure refrigerant are increased, and the refrigerant in this state flows into the accumulators 10A and 10B. The accumulators 10A and 10B separate the refrigerant into the liquid refrigerant and the gaseous refrigerant while storing the refrigerant having flowed in. The gaseous refrigerant resulting from the separation flows into the compressor 3 from the accumulators 10A and 1 0B via the intake pipe 4, and is compressed in the compressor 3 again. In this manner, the refrigerant circulates in the refrigerant circuit, and the heat pump cycle is thereby achieved.

In addition, in the hot water storage operation, for instance, the rotation speed of the compressor 3, the rotation speed of the blower 6, and the opening of the flow path of the expansion valve 9 are controlled in accordance with, for instance, the installation environment and use conditions of the heat pump water-heater outdoor unit 1. Specifically, an inverter power supply that includes the inverter module 23 changes the rotation speed of the motor within a range of about several tens of rps (Hz) to several hundred rps (Hz) while supplying electric power to the motor of the compressor 3. With this, the circulation speed and the circulation amount of the refrigerant in the heat pump cycle are adjusted, and the heating capacity of the heat pump water-heater outdoor unit 1 is controlled. In addition, the other modules mounted on the electronic substrate 24 change the rotation speed of the blower 6 within a range of about several hundred rpm to several thousand rpm while supplying electric power to the motor of the blower 6. With this, air is taken in from the rear surface portion 2b of the cabinet 2, and the air flows out to the outside from the front surface portion 2a of the cabinet 2 after passing through the air-refrigerant heat exchanger 7. The heat exchange amount between the refrigerant and the air in the air-refrigerant heat exchanger 7 is controlled in accordance with the flow rate of the air that passes through the air-refrigerant heat exchanger 7. The other modules mounted on the electronic substrate 24 adjust the opening of the refrigerant flow path using the expansion valve 9 while supplying electric power to the expansion valve 9, and control a difference between pressures before and behind the expansion valve 9.

Next, the hot water supply operation will be described. In the hot water supply operation, when a hot water supply manipulation of a user or the like is detected, the upper portion of the hot water tank 34 and the hot water supply pipe 39 are caused to communicate with each other using the switching valve 38. With this, by the action of water pressure applied to the hot water tank 34 from the water supply pipe 40, high-temperature water flows into the hot water supply pipe 39 from the upper portion of the hot water tank 34. The high-temperature water is mixed with low-temperature water supplied from the water supply pipe 40 in the mixing valve 41 to become middle-temperature water having a desired temperature. Subsequently, the middle-temperature water is supplied from the mixing valve 41 toward the hot water supply target. Note that, in the present embodiment, the hot water supply pipe 39, the water supply pipe 40, and the mixing valve 41 represent a specific example of a hot water supply circuit.

As described above in detail, according to the present embodiment, it is possible to prevent an increase in the size of the heat pump water-heater outdoor unit 1 while increasing the total capacity of the entire accumulator using the two accumulators 10A and 10B. With this, it is possible to enhance the performance of the heat pump water-heater outdoor unit 1 at low cost. In addition, it is possible to achieve the heat pump water-heater outdoor unit 1 that is easy to install and transport. Consequently, in the water heater, it is possible to increase operation efficiency during the hot water storage operation and improve the convenience of the user.

Specifically, during the operation of the heat pump water-heater outdoor unit 1, with the change of environmental conditions such as outdoor temperature and water temperature during heating and setting conditions such as heating temperature, the circulation amount of the refrigerant required for the operation easily changes. However, an increase in the size of the accumulator is limited by, for instance, the outer dimensions of the heat pump water-heater outdoor unit 1 and surplus space in the cabinet 2. In contrast to this, in the present embodiment, the two accumulators 10A and 10B are used and are connected to each other in parallel at an intermediate point in the refrigerant circuit. With this, it is possible to distribute the capacity of the accumulator by using the surplus space in the cabinet 2. In addition, it is possible to increase the total capacity of the accumulators 10A and 10B even without increasing the size of the cabinet 2, and reduce cost required to increase the size thereof. Consequently, it is possible to increase an application range in the case where the above-described various conditions greatly change, and enhance the performance of the heat pump water-heater outdoor unit 1.

In addition, in the present embodiment, the accumulators 10A and 10B that are reduced in temperature by storing the refrigerant are disposed above the compressor 3 and the electric component storage box 12 (the inverter module 23). With this, it is possible to cause cold air that is reduced in temperature by contact with the accumulators 10A and 10B to descend to an area around the compressor 3 and the electric component storage box 12. The temperature of the compressor 3 is increased during the operation of the heat pump water-heater outdoor unit 1. The electric component storage box 12 is a component that is increased in temperature by passage of a current through the individual electronic components. In particular, the temperature of the inverter module 23 becomes high by supplying a large drive current to the compressor 3. Consequently, according to the above-described configuration, it is possible to efficiently cool the compressor 3, the electric component storage box 12, and the inverter module 23 using the cold air that descends from the accumulators 10A and 10B. As a result, it is possible to improve the heat resistance of the heat pump water-heater outdoor unit 1.

Moreover, at least the accumulator 10B as one of the accumulators 10A and 10B is in surface contact with the inverter module 23. With this, it is possible to efficiently cool the inverter module 23 by using the accumulator 10B having a low temperature. On the other hand, heat conducted from the inverter module 23 to the accumulator 10B increases a refrigerant temperature in the accumulator 10B. With this, during the hot water storage operation or the like, it is possible to reduce the temperature of the refrigerant sucked into the compressor 3 and improve the capacity of the heat pump water-heater outdoor unit 1.

In addition, by using the accumulator 10B as the heatsink of the inverter module 23, it is possible to improve the heat resistance performance of the inverter module 23, and remove the dedicated heatsink or reduce the size thereof. With this, it is possible to secure the space above the electric component storage box 12 and compactly dispose the accumulators 10A and 10B in the space in the state in which the accumulators 10A and 10B are arranged in the horizontal direction.

Thus, according to the present embodiment, it is possible to achieve the heat pump water-heater outdoor unit 1 that is excellent in terms of the performance, reliability, and cost. The user is highly interested particularly in the operation efficiency of the heat pump water-heater outdoor unit 1 that performs the hot water storage operation with a midnight power service, and hence it is possible to significantly improve the marketability of the heat pump water-heater outdoor unit 1 by the present embodiment.

### Embodiment 2

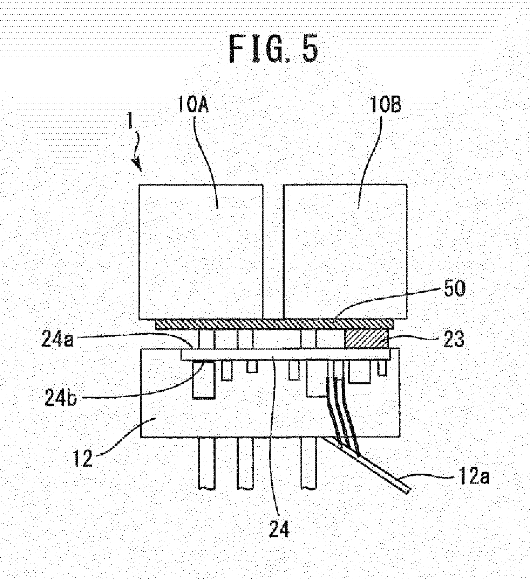

Next, with reference to Fig. 5, Embodiment 2 of the present invention will be described. The present embodiment is characterized in that a member capable of thermal conduction is interposed between the accumulator and the electronic component. Fig. 5 is an enlarged view of a principal portion in which the right upper portion of the heat pump water-heater outdoor unit according to Embodiment 2 of the present invention is enlarged and shown. As shown in the drawing, in the present embodiment, a thermally conductive member 50 is disposed between both of the accumulators 10A and 10B and the inverter module 23. The thermally conductive member 50 is formed of a material having high thermal conductivity such as, e.g., metal. The inverter module 23 is connected to both of the accumulators 10A and 10B via the thermally conductive member 50 so as to be capable of thermal conduction.

In the present embodiment configured in this manner as well, it is possible to obtain the same effects as those in Embodiment 1 described above. In particular, in the present embodiment, it is possible to adjust the positional relationship between the accumulators 10A and 10B and the inverter module 23 in accordance with, for instance, the dimensions and shape of the thermally conductive member 50, and improve flexibility in design when components are laid out in the cabinet 2.

Note that, in each of Embodiments 1 and 2 described above, the inverter module 23 is constituted by a wide band gap semiconductor such as, e.g., an SiC semiconductor. The wide band gap semiconductor is the generic name for a semiconductor having a wide width of a band gap (forbidden band) as compared with silicon. As specific examples of the wide band gap semiconductor, silicon carbide (SiC), gallium nitride (GaN), and diamond are known. According to this configuration, the wide band gap semiconductor has high heat resistance, and hence it is possible to improve the heat resistance of the inverter module 23 itself in addition to the improvement effect of the heat resistance by each of Embodiments 1 and 2 described above. Consequently, for example, even without disposing the heatsink in the vicinity of the inverter module 23, it is possible to prevent damage to the inverter module 23 caused by an increase in temperature. In addition, both accumulators 10A and 10B do not necessarily need to be brought into tight contact with the inverter module 23, and hence it is possible to increase flexibility in the design of a component layout or the like.

In each of Embodiments 1 and 2 described above, the case where the two accumulators 10A and 10B are used has been described as an example. However, the present invention is not limited thereto and, for example, three or more accumulators may also be connected to the refrigerant pipe, and the accumulators may also be disposed above the compressor 3. In addition, in Embodiment 1, the configuration has been adopted in which only the right accumulator 10B is brought into contact with the inverter module 23. However, the present invention is not limited thereto, and only the left accumulator 10A may also be brought into contact with the inverter module 23 or all of the accumulators 10A and 10B may also be brought into contact with the inverter module 23. Further, in the present invention, an accumulator that does not perform thermal conduction with the inverter module 23 may also be present.

In addition, In Embodiment 2, the case where both of the accumulators 10A and 10B are connected to the inverter module 23 using the thermally conductive member 50 such that the thermal conduction can be performed has been described as an example. However, the present invention is not limited thereto, and a configuration may also be adopted in which only part of a plurality of accumulators is connected to the inverter module 23 using the thermally conductive member 50, and the other accumulators are directly connected to the inverter module 23. Further, in the present invention, a plurality of accumulators may not need to be in contact with or connected to the electronic component, and only need to be disposed above the compressor 3.

In addition, in each of Embodiments 1 and 2, the case where the "horizontal specific direction" is the left and right direction of the heat pump water-heater outdoor unit 1 has been described as an example. In addition, the accumulators 10A and 10B and the electric component storage box 12 are disposed in the upper portion on one side in the left and right direction (the right upper portion), and the air-refrigerant heat exchanger 7 is disposed on the other side in the left and right direction (the left side). However, the present invention is not limited thereto, and the accumulators 10A and 10B and the electric component storage box 12 may also be disposed on the left side, and the air-refrigerant heat exchanger 7 may also be disposed on the right side. Further, in the present invention, the "horizontal specific direction" may also be another horizontal direction that includes the front and rear direction.

In addition, in Embodiment 1, Fig. 4 shows an example of the water heater, and the present invention is not limited to the water heater. That is, the present invention as defined in the claims can be applied to various heat pump water heaters each having a configuration different from that in Fig. 4.

### [Reference Signs List]

- 1: heat pump water-heater outdoor unit
- 2: cabinet
- 2a: front surface portion
- 2b: rear surface portion
- 2c: upper surface portion
- 2d: right side surface portion
- 2e: left side surface portion
- 2f: service panel
- 3: compressor (refrigerant circuit)
- 4: intake pipe (refrigerant pipe, refrigerant circuit)
- 4a,: 4b duct
- 5: discharge pipe (refrigerant pipe, refrigerant circuit)
- 6: blower
- 7: air-refrigerant heat exchanger (refrigerant circuit)
- 8: water-refrigerant heat exchanger (refrigerant circuit)
- 9: expansion valve (refrigerant circuit)
- 10A, 10B: accumulator (refrigerant circuit)
- 11: tank unit
- 12: electric component storage box
- 12a: terminal block
- 14: machine chamber
- 15: blower chamber
- 16: partition plate
- 16a: upper end portion
- 17: base
- 23: inverter module (electronic component)
- 24: electronic substrate
- 24a: upper surface
- 24b: lower surface
- 28: water inlet valve
- 29: hot water outlet valve
- 30: internal inflow pipe
- 32: internal outflow pipe
- 34: hot water tank
- 35: water pump
- 36: forward pipe
- 37: return pipe
- 38: switching valve
- 39: hot water supply pipe (hot water supply circuit)
- 40: water supply pipe (hot water supply circuit)
- 41: mixing valve
- 50: thermally conductive member

## Claims

1. A heat pump water-heater outdoor unit (1) comprising:
a cabinet (2) that constitutes an outer casing;
a refrigerant circuit that is constituted by annularly connecting a compressor (3), an air-refrigerant heat exchanger (7), an expansion valve (9), and a water-refrigerant heat exchanger (8) that are provided in the cabinet (2) by a refrigerant pipe, and in which a refrigerant circulates; and
an electronic component (23) configured to drive the compressor (3),
**characterized in that**
the outdoor unit (1) further comprises a plurality of accumulators (10A, 10B) that are connected to the refrigerant pipe and constitute part of the refrigerant circuit and are disposed above the compressor (3) in the cabinet (2), wherein the electronic component (23) comprises a wide band gap semiconductor and is disposed in the cabinet (2) in a state in which the electronic component (23) is in contact with a lower surface of at least one of the accumulators (10A, 10B).

2. The heat pump water-heater outdoor unit (1) according to Claim 1, wherein
the accumulators (10A, 10B) are connected to each other in parallel at an intermediate point in the refrigerant circuit.

3. The heat pump water-heater outdoor unit (1) according to Claim 1 or 2, further comprising a blower (6) configured to blow air to the air-refrigerant heat exchanger (7),
wherein
the electronic component (23) is disposed in a state in which the electric component is in contact with only one of the accumulators (10A, 10B) that is positioned on a side that is far from the blower (6).

4. The heat pump water-heater outdoor unit (1) according to any one of Claims 1 to 3, wherein
when a horizontal specific direction is used as a reference, the compressor (3) is disposed in a lower portion on one side of the specific direction in the cabinet (2),
the accumulators (10A, 10B) and the electronic component (23) are disposed in an upper portion on the one side of the specific direction in the cabinet (2) and are held in a state in which the accumulators (10A, 10B) and the electronic component (23) are in surface contact with each other, and
the air-refrigerant heat exchanger (7) is disposed on the other side of the specific direction in the cabinet (2).

5. The heat pump water-heater outdoor unit (1) according to any one of Claims 1 to 4, wherein
the electronic component (23) is connected to one of the accumulators (10A, 10B) via a member (50) capable of thermal conduction.

6. The heat pump water-heater outdoor unit (1) according to any one of Claims 1 to 4, wherein
the electronic component (23) is connected to two of the accumulators (10A, 10B) via a member (50) capable of thermal conduction.

7. The heat pump water-heater outdoor unit (1) according to any one of Claims 1 to 6, wherein
the wide band gap semiconductor comprises any of silicon carbide (SiC), gallium nitride (GaN), and diamond.

8. A water-heater comprising:
the heat pump water-heater outdoor unit (1) according to any one of Claims 1 to 7;
a hot water tank (34) in which hot water heated by the heat pump water-heater outdoor unit (1) is to be stored; and
a hot water supply circuit configured to supply the hot water stored in the hot water tank (34) to an external hot water supply target.

## Patentansprüche

1. Wärmepumpen-Wassererhitzer-Außeneinheit (1), umfassend:
einen Schrank (2), der ein äußeres Gehäuse bildet;
einen Kältemittelkreislauf, der durch ringförmiges Verbinden eines Verdichters (3), eines Luft-Kältemittel-Wärmetauschers (7), eines Expansionsventils (9) und eines Wasser-Kältemittel-Wärmetauschers (8), die in dem Schrank (2) vorgesehen sind, durch eine Kältemittelleitung gebildet wird, und in dem ein Kältemittel zirkuliert; und
eine elektronische Komponente (23), die eingerichtet ist, den Verdichter (3) anzutreiben,
**dadurch gekennzeichnet, dass**
die Außeneinheit (1) ferner eine Vielzahl von Sammlern (10A, 10B) umfasst, die mit der Kältemittelleitung verbunden sind und einen Teil des Kältemittelkreislaufs bilden und über dem Verdichter (3) im Schrank (2) angeordnet sind, wobei die elektronische Komponente (23) einen Halbleiter mit breitem Bandabstand umfasst und in dem Schrank (2) in einem Zustand angeordnet ist, in dem die elektronische Komponente (23) in Kontakt mit einer unteren Oberfläche von zumindest einem der Sammler (10A, 10B) steht.

2. Wärmepumpen-Wassererhitzer-Außeneinheit (1) nach Anspruch 1, wobei
die Sammler (10A, 10B) an einem Zwischenpunkt im Kältemittelkreislauf miteinander parallel verbunden sind.

3. Wärmepumpen-Wassererhitzer-Außeneinheit (1) nach Anspruch 1 oder 2, ferner umfassend ein Gebläse (6), das eingerichtet ist, Luft zu dem Luft-Kältemittel-Wärmetauscher (7) zu blasen, wobei
die elektronische Komponente (23) in einem Zustand angeordnet ist, in dem die elektronische Komponente in Kontakt mit nur einem der Sammler (10A, 10B) steht, der auf einer Seite positioniert ist, die weit vom Gebläse (6) entfernt ist.

4. Wärmepumpen-Wassererhitzer-Außeneinheit (1) nach einem der Ansprüche 1 bis 3, wobei
wenn eine horizontale spezifische Richtung als Referenz verwendet wird, der Verdichter (3) in einem unteren Abschnitt auf einer Seite der spezifischen Richtung im Schrank (2) angeordnet ist,
die Sammler (10A, 10B) und die elektronische Komponente (23) in einem oberen Abschnitt auf der einen Seite der spezifischen Richtung im Schrank (2) angeordnet sind und in einem Zustand gehalten werden, in dem die Sammler (10A, 10B) und die elektronische Komponente (23) in Oberflächenkontakt miteinander stehen, und
der Luft-Kältemittel-Wärmetauscher (7) auf der anderen Seite der spezifischen Richtung im Schrank (2) angeordnet ist.

5. Wärmepumpen-Wassererhitzer-Außeneinheit (1) nach einem der Ansprüche 1 bis 4, wobei
die elektronische Komponente (23) mit einem der Sammler (10A, 10B) über ein Element (50) verbunden ist, das in der Lage ist, Wärme zu leiten.

6. Wärmepumpen-Wassererhitzer-Außeneinheit (1) nach einem der Ansprüche 1 bis 4, wobei
die elektronische Komponente (23) mit zweien der Sammler (10A, 10B) über ein Element (50) verbunden ist, das in der Lage ist, Wärme zu leiten.

7. Wärmepumpen-Wassererhitzer-Außeneinheit (1) nach einem der Ansprüche 1 bis 6, wobei
der Halbleiter mit breitem Bandabstand irgendeines umfasst von Siliziumkarbid (SiC), Galliumnitrid (GaN) und Diamant.

8. Wassererhitzer, umfassend:
die Wärmepumpen-Wassererhitzer-Außeneinheit (1) nach einem der Ansprüche 1 bis 7;
einen Warmwassertank (34), in dem durch die Wärmepumpen-Wassererhitzer-Außeneinheit (1) erwärmtes Warmwasser gespeichert werden soll; und
einen Warmwasserversorgungskreislauf, der eingerichtet ist, das in dem Warmwassertank (34) gespeicherte Warmwasser einem externen Warmwasserversorgungsziel zuzuführen.

## Revendications

1. Unité extérieure de chauffe-eau à pompe à chaleur (1) comprenant :
un boîtier (2) qui constitue une enveloppe externe ;
un circuit de réfrigérant qui est constitué en reliant de manière annulaire un compresseur (3), un échangeur de chaleur air-réfrigérant (7), un détendeur (9) et un échangeur de chaleur eau-réfrigérant (8) qui sont prévus dans le boîtier (2) au moyen d'un tuyau de réfrigérant, et dans lequel circule un réfrigérant ; et
un composant électronique (23) configuré pour entraîner le compresseur (3),
**caractérisée en ce que**
l'unité extérieure (1) comprend en outre une pluralité d'accumulateurs (10A, 10B) qui sont reliés au tuyau de réfrigérant et constituent une partie du circuit de réfrigérant et sont disposés au-dessus du compresseur (3) dans le boîtier (2), dans laquelle le composant électronique (23) comprend un semi-conducteur à large bande interdite et est disposé dans le boîtier (2) dans un état dans lequel le composant électronique (23) est en contact avec une surface inférieure d'au moins un des accumulateurs (10A, 10B).

2. Unité extérieure de chauffe-eau à pompe à chaleur (1) selon la revendication 1, dans laquelle
les accumulateurs (10A, 10B) sont reliés l'un à l'autre en parallèle à un point intermédiaire dans le circuit de réfrigérant.

3. Unité extérieure de chauffe-eau à pompe à chaleur (1) selon la revendication 1 ou 2, comprenant en outre un ventilateur (6) configuré pour souffler de l'air vers l'échangeur de chaleur air-réfrigérant (7), dans laquelle
le composant électronique (23) est disposé dans un état dans lequel le composant électrique est en contact avec un seul des accumulateurs (10A, 10B) qui est positionné sur un côté qui est loin du ventilateur (6).

4. Unité extérieure de chauffe-eau à pompe à chaleur (1) selon l'une quelconque des revendications 1 à 3, dans laquelle
lorsqu'une direction spécifique horizontale est utilisée en tant que référence, le compresseur (3) est disposé dans une partie inférieure sur un côté de la direction spécifique dans le boîtier (2),
les accumulateurs (10A, 10B) et le composant électronique (23) sont disposés dans une partie supérieure sur ledit un côté de la direction spécifique du boîtier (2) et sont maintenus dans un état dans lequel les accumulateurs (10A, 10B) et le composant électronique (23) sont en contact superficiel l'un avec l'autre, et
l'échangeur de chaleur air-réfrigérant (7) est disposé sur l'autre côté de la direction spécifique dans le boîtier (2).

5. Unité extérieure de chauffe-eau à pompe à chaleur (1) selon l'une quelconque des revendications 1 à 4, dans laquelle
le composant électronique (23) est relié à l'un des accumulateurs (10A, 10B) via un élément (50) capable de conduction thermique.

6. Unité extérieure de chauffe-eau à pompe à chaleur (1) selon l'une quelconque des revendications 1 à 4, dans laquelle
le composant électronique (23) est relié à deux des accumulateurs (10A, 10B) via un élément (50) capable de conduction thermique.

7. Unité extérieure de chauffe-eau à pompe à chaleur (1) selon l'une quelconque des revendications 1 à 6, dans laquelle
le semi-conducteur à large bande interdite comprend l'un quelconque parmi le carbure de silicium (SiC), le nitrure de galium (GaN) et le diamant.

8. Chauffe-eau comprenant :
une unité extérieure de chauffe-eau à pompe à chaleur (1) selon l'une quelconque des revendications 1 à 7 ;
un réservoir d'eau chaude (34) dans lequel de l'eau chaude chauffée par l'unité extérieure de chauffe-eau à pompe à chaleur (1) doit être stockée ; et
un circuit d'alimentation en eau chaude configuré pour fournir l'eau chaude stockée dans le réservoir d'eau chaude (34) à une cible d'alimentation en eau chaude externe.
